# EUROPEAN PATENT SPECIFICATION

(11) **EP 3 597 493 B1**
(45) Date of publication and mention of the grant of the patent: **31.03.2021**
(21) Application number: 18382532.2
(22) Date of filing: 17.07.2018
(51) Int. Cl.: B60T 7/06, G05G 1/44

(54) **A PEDAL GROUP**
PEDALGRUPPE
GROUPE DE PÉDALE

(43) Date of publication of application: 22.01.2020
(73) Proprietor: Flexngate Automotive Iberica, S.L.U., 08520 Les Franqueses del Valles (ES)
(72) Inventor: AVEDILLO CARRATERO, Ernesto, 08960 SANT JUST DESVERN (ES)
(74) Representative: Sugrañes Patentes y Marcas

(56) References cited:
- DE-A1-102004 018 266
- US-A- 3 299 737
- US-A- 5 398 569

## Description

### Technical field of the invention

The invention relates to a pedal group, such as a brake pedal group of a vehicle, which in an assembled position comprises a pedal body joined to a pedal shaft, the free ends of which are introduced into plain bearings, each one of which is housed in a support hole of a pedal support.

### Background of the invention

Through patent document DE 102004018266, a break pedal group is known that comprises a pedal support with two lateral holes between which a pedal shaft extends to which a pedal body is integrally joined.

A characteristic of the invention proposed in DE 102004018266 is that the pedal support comprises extensions that determine stops between which the pedal body may be arranged with a gap in an assembled position and which, due to butting against the pedal body, prevent axial movements of the pedal shaft that may cause one of the free ends thereof to be released from the associated lateral hole of the pedal support.

For the snug housing of each free end of the pedal shaft in the corresponding lateral hole of the pedal support, the use of plain bearings is proposed, which carry out the function of bearings, each one of which is snugly inserted in each lateral hole of the pedal support and into which, in an assembled position of the pedal group, the free ends of the pedal shaft are introduced.

The extensions that determine the stops for limiting the axial movement of the pedal shaft are configured to butt against the pedal body when the pedal body takes an angular position with respect to the pedal support within a pre-established angle range, which includes the different angular positions the pedal body can take during the operation thereof once the pedal group is mounted in the vehicle and coupled to the brake mechanism. The aforementioned extensions ensure a retention of the pedal body that prevents the pedal from losing functionality even in the case that the bearings of the pedal are removed. It is impossible to remove the pedal shaft from the position thereof inside the lateral holes of the pedal support when the pedal is in an operative position.

These extensions that determine the stops that limit the axial movement of the pedal shaft in the previously mentioned conditions do not prevent said axial movement in other angular positions outside of the pre-established angle range for the same. Advantageously, this allows an assembly phase of the pedal group to be carried out in a simple way, arranging the pedal body in one of said angular positions outside of the angle range associated with the normal operation of the pedal, first inserting a free end of the pedal shaft in a lateral hole of the pedal support and moving it until the other free end of the pedal shaft is aligned with the other lateral hole, then pulling back the pedal shaft in the opposite direction, inserting it at least partially in the aforementioned other lateral hole. Once this assembly phase of the pedal body in the support is finished, the pedal body is rotated, situating it in a working or operative position, such that the extensions of the pedal support prevent the pedal shaft from being extracted in the previously described way.

Furthermore, the proposal according to DE 102004018266 envisages the plain bearings being provided with a non-return step on the outside thereof, in the proximity of the mouth thereof which, in the operative position of the pedal group assembly rests on the inner edge of the associated support hole of the pedal support wherein the same are housed, and which prevent the plain bearings from being extracted from the aforementioned hole in the direction towards the outside of the pedal support. The non-return step has a general configuration of an arrowhead allowing for the introduction of the aforementioned plain bearings in the corresponding lateral holes of the pedal support from the outside, the mouth of the plain bearings slightly deforming towards the inside until the inner edge of these lateral holes goes beyond the non-return step, automatically restoring the original form of the mouth of the plain bearings, the non-return steps being supported on the inner edge of the lateral holes.

Although this characteristic should contribute to avoiding the extraction of the pedal shaft from the lateral holes even when the pedal body takes an angular position outside of the pre-established angle range for the operation thereof, in practice it has been demonstrated that providing these non-return steps is not enough to guarantee the extraction of the pedal shaft; or does not guarantee a sufficient retention of the pedal shaft from a possible lateral force that complies with the required safety conditions.

In effect, it could be that after the assembly phase of the pedal group and before arranging the pedal body in an angular position within the pre-established angle position, being before or when the pedal group is mounted in the vehicle and is coupled to the brake mechanism, the pedal group may receive a blow, may fall or receive an impact significant enough so that the force of the pedal shaft on the plain bearing could either cause the plain bearing to break or cause a plastic deformation of the aforementioned plain bearing. For example, tests performed on commercial pedal groups have shown that subjecting the pedal axis to forces similar to 1000N, a force equivalent to the impact generated by a fall of the assembly from a height of 200 mm, can be enough to break the plain bearings.

Thus, since the breakage of a plain bearing is perceptible by mere visual examination and allows the pedal group to be removed from the assembly line or from the supply line, the occasional plastic deformation of the plain bearing, for example of the bottom that receives the pressure of the free end of the pedal or of the non-return step, is not easily identifiable and can lead to the assembly of a defective pedal group in a vehicle.

One aim of the present invention is a pedal group that can overcome these drawbacks.

### Description of the invention

The pedal group proposed to solve the previously mentioned drawbacks comprises, in an assembled position, a pedal body joined to a pedal shaft the first and second free ends of which are introduced in plain bearings, each one of which is housed in a support hole of a pedal support, wherein said plain bearings have on the outer part thereof and on the area of the mouth thereof a non-return step which in an operative position of the pedal group rests against the inner edge of the support hole of the pedal support box, and which prevents the plain bearing from being extracted from the aforementioned hole in the direction towards the outside of the pedal support.

The pedal group is characterized in that the pedal shaft has a bulge in the proximity of at least one of the first or second free ends thereof, which in the operative position of the group pedal assembly does not interfere with the mouth of the plain bearing in which said free end is introduced, but which in a forced assembly position, which comprises an undesired axial movement D of the pedal shaft, does interfere with the mouth of the aforementioned plain bearing, expanding it outwardly and, among other effects, anchoring the non-return step against the aforementioned inner edge of the support hole of the pedal support.

One example of undesired movement is an impact caused by the accidental fall of the pedal group before the assembly thereof in a vehicle.

Advantageously, as will be explained below, the interference between the bulge and the mouth of the bearing contributes to expanding the bushing inside the hole in which it is introduced, as it deforms the mouth of the bushing to ensure the anchoring of the non-return step of the bushing against the inner edge of the support hole of the pedal support. In a practical way, these effects contribute to the plain bearing being able to withstand greater stresses without breaking or becoming detached from the pedal support.

The proposed solution is further compatible with pedal groups whose support is made up of one or two retaining extensions to act as a stop with the pedal body when the same takes an operative angular position, and therefore it is applicable to existing pedal supports.

In a variant of the invention, the bulge is formed by a discreet projection, which is not substantially prolonged throughout the pedal shaft.

In this case, the projection can be in the form of an annular projection. The projection, either in an annular shape or another shape, can be an integral part of the shaft or can be made up of an insert joined to the pedal shaft.

The bulge can also be made up of a transition between two portions longitudinally contiguous of the pedal shaft, coaxial and with different cross sections.

The pedal shaft can have a single bulge or two bulges, in this case the bulges of different nature being combined, each one intended to cooperate with a corresponding plain bearing. Then, each bulge will be located in the area of influence of a corresponding plain bearing.

Thus, in an embodiment, in the proximity of a first free end, the pedal shaft has a first bulge formed by an annular projection, and in the proximity of a second free end, a second bulge formed by a transition between two longitudinal contiguous portions of the pedal shaft, coaxial and of different cross sections.

According to an embodiment, the bearing, or if applicable the plain bearings in which one free end of the pedal shaft with the associated bulge is introduced, comprises a bottom with a support part, intended to receive the support of the aforementioned free end or tip of the pedal shaft, elastically deformable to absorb at least an axial movement d of the pedal shaft in the direction towards the pedal support, wherein d<D, this axial movement d being insufficient to produce the interference of the bulge with the mouth of the plain bearing. As a result, the expansion effect of the bushing will not be produced for small movements of the pedal shaft, for example less than 1 mm.

The aforementioned support part of the bottom of the bushing can be in the form of a band, being made up of a strip of material that forms the bottom of the plain bearing that is joined by the ends thereof to the aforementioned bottom and which is slightly cambered towards the mouth of the plain bearing.

The elastic deformation of the plain bearing allows part of the force to which the same is subjected to, by the pedal shaft moving, to be absorbed contributing to the elastic limit of the bushing reaching higher values of movement or of force in the axial direction said pedal shaft applies to the plain bearing.

In an embodiment, in the strip of material that has the shape of a band, and which forms the support part, a central part acutely more arched is distinguished, on the top of which the free end of the pedal shaft introduced in the plain bearing rests. This allows for a particularly advantageous distribution of force applied to the bottom of the bearing.

The distance D is preferably comprised between 0.75 and 1.5 mm. It is envisaged that the distance d is at least 60% of the distance D.

In one variant of the invention, as was previously mentioned, the pedal support can comprise at least an extension that acts as a limit stop of axial movement of the pedal shaft by contact with the pedal body when the same takes an angular position within a pre-established range, inside of which the pedal is intended to be able to operate to carry out the function thereof.

### Brief description of the drawings

Fig. 1 shows a schematic figure representative of the current state of the art;
Fig. 2 is a schematic figure of the proposal according to the invention;
Fig. 3 is a perspective view of a pedal group according to the invention;
Fig. 4 is a cross section view of the highlighted part in the box of Fig. 3;
Fig. 5 to 7 are perspective, plan and cross-sectional views of a plain bearing of a pedal group according to a variant of the invention;
Fig. 8 is a perspective view of a pedal group according to a variant of the invention;
Figs. 9 and 10 are a sequence that schematically shows the effect that is produced in the pedal group of the invention when the pedal shaft is axially moved a distance D; and
Fig. 11 is a graph that compares the behaviour of a pedal group according to the state of the art and of a pedal group according to the invention when the pedal shaft is subjected to a force that moves it axially.

### Detailed description of the invention

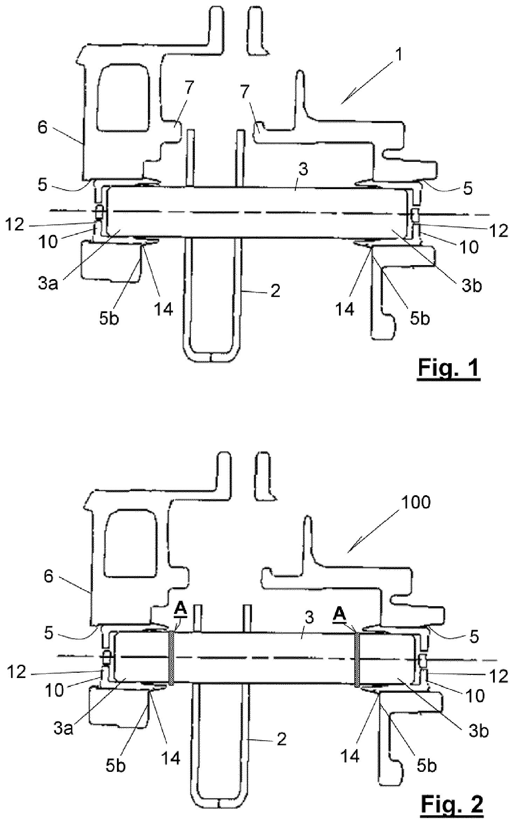

Fig. 1 schematically shows a pedal group 1 representative of the current state of the art. Specifically, Fig. 1 illustrates a brake pedal group 1 that comprises a pedal support 6 with two lateral holes 5 between which a pedal shaft 3 extends to which a pedal body 2 is integrally joined.

The pedal support 6 comprises extensions 7 that determine stops, between which the pedal body 2 is arranged with a gap when the same takes on an angular position within a pre-established angle range for the operation thereof. Outside of this angle range the axial movement of the pedal shaft 3 is dependent on the anchoring provided by plain bearings 10 housed in the lateral holes and inside of which the free ends 3a and 3b of the pedal shaft 3 are inserted. For this purpose, these plain bearings 10 comprise a non-return step 14 in the proximity of the mouth thereof which rests against the inner edge 5b of these holes 5. This anchoring, as was previously mentioned, is proven to be insufficient or unsafe when the pedal body is subjected to specific outer forces that tend to move the same axially.

Fig. 2 shows a pedal group 100 similar to that of Fig. 1, illustrating the pedal body 2 in an angular, non-operative position, such that it does not interfere with the extensions 7 in the case of the pedal shaft 3 moving axially. In this case, however, the pedal shaft 3 has or has been provided with bulges A near the free ends 3a and 3b thereof which, if an undesired axial movement D is produced in the pedal shaft 3, will interfere with the mouth of the nearby plain bearing 10, expanding it outwards, and, among other effects, ensuring the anchoring of the non-return step 14 in the aforementioned inner edge 5b of the support hole 5 of the pedal support 6. As will be further explained in greater detail below, the expansion of the plain bearing 10 in this anchoring zone contributes in a practical way to reducing the concentration of forces that the free end of the pedal shaft 3 will exert on the bottom 12 of the plain bearing 10, notably increasing the resistance of this component to the deterioration or breakage thereof.

In order to maintain the advantages offered by a pedal group such as that of Fig. 1, with regard to the assembly phase of the pedal group, the bulges A will be dimensioned such that they do not prevent the introduction of the free ends 3a and 3b of the pedal shaft 3 in the holes 5, or at least one of these free ends 3a or 3b in one of the holes 5 and, specifically, in the first lateral hole 5 in which a first free end 3a or 3b of the pedal shaft 3 will be introduced and will be positioned to align the second free end, the other of 3a or 3b, of the pedal shaft 3 with the other lateral hole 5 of the pedal support 6 in which it will be introduced, this second free end then partially pulling back the first free end of the pedal shaft 3 of the first lateral hole 5. As a result, at least one of the bulges A will be dimensioned so that the cross section of the pedal shaft 3 in this point can be introduced in the corresponding lateral hole 5.

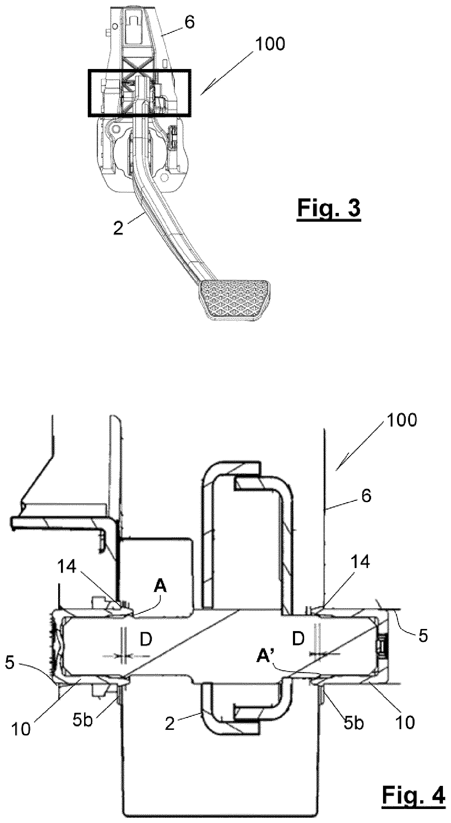

Fig. 4 shows an example of an implementation of the invention. Fig. 4 is a cross section of the area highlighted in a box of the pedal group 100 shown in the Fig. 3.

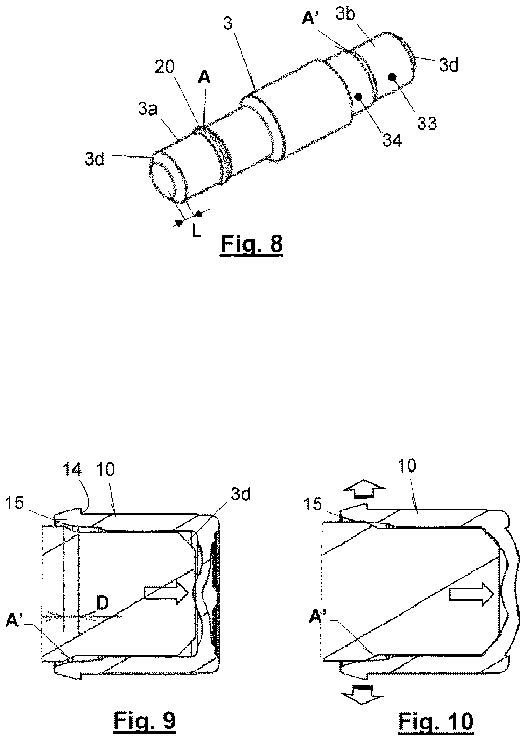

The pedal group 100 of Fig. 4 mounts a pedal shaft 3 such as that of Fig. 8, made from an essentially cylindrical piece of steel, the different qualities able to be, for example, C8, C10 or C45, according to standard DIN EN 10263:2. This pedal shaft 3 comprises a central portion on which the pedal body 2 will adjust and at each side of which the pedal shaft 3 extends to the free ends 3a and 3b thereof. In the proximity of the free end 3a, a bulge A formed by an annular projection 20 is distinguished; while in the proximity of the free end 3b another bulge A' is distinguished, formed in this case by a transition between two longitudinal contiguous portions 33, 34 of the pedal shaft 3, coaxial and with different cross sections, specifically with different diameters.

Each one of these bulges A and A' is intended to cooperate with the mouth 11 of the nearby plain bearing 10 if the pedal shaft 3 moves axially a distance D, starting from a centred position.

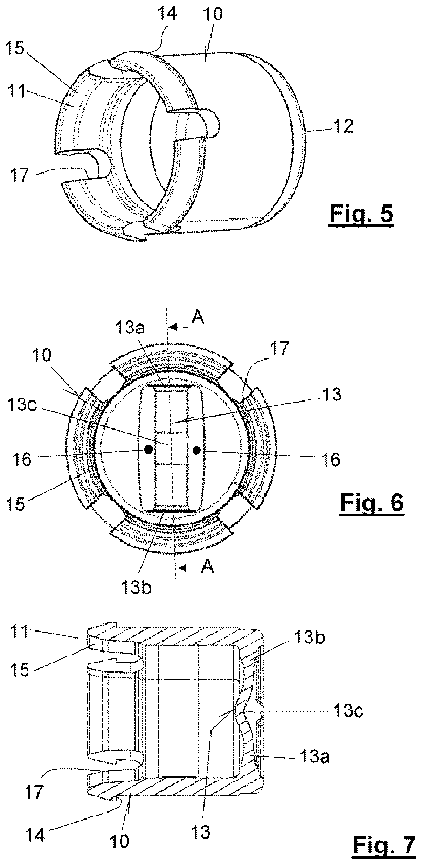

The same pedal group 100 of Fig. 4 mounts plain bearings 10 as is shown in Figs. 5 to 7. The example is a plain bearing 10 of a single piece made of plastic material, such as POM+MoS2 (Polyoxymethylene with Molybdenum Disulfide) and generally cylindrical with a bottom 12, the characteristics of which will be described below.

Conventionally, the bearing 10, in the proximity of the mouth 11 and outer portion thereof, comprises a sort of non-return step 14, essentially annular, the continuity of which is interrupted by slots 17 that extend in an axial direction from the edge of the mouth 11 and which allow for the expansion of said mouth 11 when the same goes over the bulges A or A', that is when the bulges A or A' push from inside and outwardly in the area of the plain bearing 10 with the non-return step 14.

It must be noted that the edge of the mouth 11 of the plain bearing 10 has a slightly reduced thickness with respect to the body of the plain bearing 10 and is configured in longitudinal cross section in the shape of an arrowhead to facilitate the introduction of the plain bearing 10 in the lateral hole 5 of the pedal support 6 from the outside. Inside, from the edge and in the direction toward the bottom 12 of the plain bearing 10, the arrowhead has a ramp 13a intended to arrange the apex of the arrowhead sufficiently separated from the outer contour of the pedal shaft 3 to facilitate the introduction of the bulge A or A' in the mouth 11 of the plain bearing 10, for the purposes of expanding it, when an axial movement of the pedal shaft 3 of a sufficient magnitude is produced.

As such, at the bottom 12 of the plain bearing 10 referred to, the same comprises two essentially straight and parallel slots 16 that together determine a support part 13, intended to receive the support of a free end 3a or 3b of the pedal shaft 3, which is elastically deformable to absorb an axial movement d of the pedal shaft 3 in the direction towards the outside of the pedal support 6, at least while the d<D relation is complied with. This elastic deformation will even be able to continue in case the movement is greater than the distance D.

As shown by Fig. 7, in the example, the support part has the form of a band, and is made up of a strip of material that forms the bottom 12 of the plain bearing 10 that is joined by the ends 13a, 13b thereof to the aforementioned bottom 12. The support part 13 is, in the example, slightly cambered toward the mouth 11 of the plain bearing 10 and in the same a central part 13c acutely more arched is distinguished, on the top of which the free end of the pedal shaft 3 introduced in the plain bearing 10 rests. In an assembled position, the free ends 3a and 3b of the pedal shaft 3 can lightly rest against the support parts 13 of the plain bearings 10 for the purposes of eliminating an undesired gap between the pedal shaft 3 and the pedal support 6. In other words, it is envisaged that in an assembled position both free ends 3a and 3b of the pedal shaft 3 touch or elastically deform the support part 13 of the associated plain bearings 10. Alternatively, it can be seen that in an assembled position, there is a gap between the pedal shaft 3 and the support parts 13 that on each side of the shaft are provided by the plain bearings 10.

In any case, in a variant of interest, the arrangement of the bulges A and A' in the pedal shaft 3 are selected according to the configuration of the plain bearings 10 so that the interference between both does not occur until the pedal shaft 3 resting against a bottom 12 of a plain bearing 10 has been moved from a centred or nominal position in the direction toward said bottom 12 a distance D, in the example, of 1 mm.

The functioning of the pedal group 100 until the same achieves a forced assembled position which comprises the aforementioned axial movement D in the same direction of the pedal shaft 3 is the following:
- Starting from the position illustrated in Fig. 9, which corresponds to an assembly position under non-forced conditions, by the pedal shaft 3 moving in the direction indicated by the arrow in a first phase of movement, the free end 3b of the pedal shaft, by contact against the support part 13 of the bottom 12 of the plain bearing 10, will elastically deform said support part, the movement d of the pedal shaft 13 absorbing this deformation, reducing the axial stretching forces to which the plain bearing 10 would be subjected in the case of having a rigid bottom 12;
- By the pedal shaft 3 continuing with the movement thereof and reaching the movement distance D, the bulge A' contacts the inner part of the mouth 11 of the plain bearing 10, as shown in Fig. 10;
- Once this point is reached, continuing with the movement of the pedal shaft 3, the bulge A' will expand the mouth 11 of the plain bearing against the walls of the hole 5 in which the plain bearing 10 is housed, to a greater extent the closer the bulge A' moves to the inner edge 5b of the hole 5. Likewise, the bulge of the outermost edge of the mouth 11 ensures the anchoring of the non-return step 14 against said inner edge 5b of the hole 5. Note that although the free end 3b of the pedal shaft 3 will continue to exert pressure on the support part 13 of the bottom 12 of the plain bearing 10, this bottom 12 will not be that which absorbs all of the force of the thrust of the pedal shaft 3 since the expansion of the plain bearing 10 and the friction of the same against the inside of the hole 5 will contribute in a notable way to withstanding this force.

To further enhance this effect, in the variant of the exemplified invention, the edge of the free ends 3a and 3b of the pedal shaft 3 are machined to provide it with a more pronounced chamfer 3d. In the present case, the chamfered portion is greater than it ordinarily is, the portion of the pedal shaft 3 chamfered at a length L (see Fig. 8) of approximately 2 mm, and the inclination of the chamfer having been chosen at 45° with respect to the longitudinal axis of the pedal shaft 3.

This chamfer 3d reduces the contact surface of the pedal shaft 3 with the bottom 12 of the plain bearing 10 in a non-forced situation (see Fig. 9), allowing a greater deformation of the latter before the tip of the pedal shaft 3 rests against a non-elastic part, devoid of the band, of the plain bearing 10, as illustrated in Fig. 10.

On the one hand, this deformation allows for the assembly of the plain bearing around the pedal shaft 3, a situation for which the non-return step 14 must exceed the inner edge 5b of the corresponding support hole 5 and, on the other hand, ensures that an exceedingly rigid interference between the tip of the pedal shaft 3 and the bottom 12 of the plain bearing 10 prevents the expansion of the plain bearing 10 toward the outside in the area of the mouth 11 thereof by the pressure of the bulge A or A' from happening, or from happening in an undesired way.

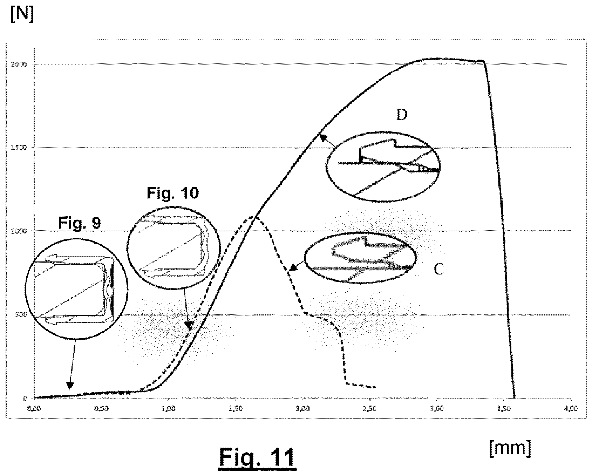

Fig. 11 shows the behaviour of plain bearings in combination with a conventional pedal shaft, scenario C in dashed lines, and in combination with a modified pedal shaft with bulges according to the invention, scenario D in a continuous line, in this second case the plain bearing also being provided with a bottom with an elastically deformable support part in the previously described form referring to Figs. 8, 9 and 10.

In Fig. 11 the different behaviour between both scenarios C and D can be deduced when an incremental force is applied, especially when 1000N is reached, a situation in which the plain bearing in conventional scenario C escapes from the hole in which it is inserted because the small portion of material that makes up the non-return step gives way and/or the plain bearing will be completely plastically deformed until it most likely breaks. On the other hand, the plain bearing in scenario D, according to the invention, by the effect of the chamfer, the pedal shaft will continue to elastically deform the plain bearing but in a simultaneous fashion said plain bearing will expand at the area of the mouth thereof, ensuring the anchoring of the non-return step thereof and crushing the body of the plain bearing against the inside of the hole, preventing the same from exiting the position thereof until the plain bearing breaks either at the bottom thereof or at the anchoring zone, but once a retaining force of approximately 2000N is reached, which doubles the conventional value.

## Claims

1. A pedal group (100), such as a brake pedal group of a vehicle, which comprises, in an assembly position, a pedal body (2) joined to a pedal shaft (3) the first and second free ends (3a, 3b) of which are introduced in plain bearings (10) each one of which is housed in a support hole (5) of a pedal support (6), wherein said plain bearings (10) have on the outer part thereof and in the area of the mouth (11) thereof a non-return step (14) which in an operative position of the pedal group rests against the inner edge (5b) of the support hole (5) of the pedal support (6), and which prevents the plain bearing from being extracted from the aforementioned hole in the direction towards the outside of the pedal support, the pedal group being **characterized in that** the pedal shaft (3) has a bulge (A or A') in the proximity of at least one of the first or second free ends (3a, 3b) which
- in the operative position of the pedal group assembly, does not interfere with the mouth (11) of the plain bearing (10) in which said free end (3a, 3b) is introduced, but which
- in a forced assembly position which comprises an undesired axial movement D of the pedal shaft (3) interferes with the mouth (11) of the aforementioned plain bearing, expanding it towards the outside, among other effects anchoring the non-return step (14) against the aforementioned inner edge (5b) of the support hole (5) of the pedal support (6).

2. The pedal group (100) according to claim 1, **characterized in that** the bulge (A) is formed by a discreet projection (20) that is not substantially extended along the pedal shaft (3).

3. The pedal group (100) according to the preceding claim, **characterized in that** the bulge (A) is formed by an annular projection (20).

4. The pedal group (100) according to claim 1, **characterized in that** the bulge (A') is made up of a transition between two portions (33, 34) longitudinally contiguous of the pedal shaft (3), coaxial and with different cross sections.

5. The pedal group (100) according to claims 3 and 4, the pedal shaft (3) of which, in the proximity of a first free end (3a), has a first bulge (A) formed by an annular projection (20); and in the proximity of a second free end (3b) has a second bulge (A') formed by a transition between two longitudinal contiguous portions (33, 34) of the pedal shaft (3), coaxial and with different cross sections.

6. The pedal group (100) according to any one of the preceding claims, **characterized in that** the plain bearing (10), or if applicable the plain bearings, in which one free end (3a; 3b) of the pedal shaft (3) with the associated bulge (A or A') is introduced, comprises a bottom (12) with a support part (13), intended to receive the support of the aforementioned free end of the pedal shaft, elastically deformable to absorb at least an axial movement d of the pedal shaft (3) in the direction towards the pedal support (6), wherein d<D, this axial movement d being insufficient to produce the interference of the bulge (A or A') with the mouth (11) of the plain bearing (10).

7. The pedal group (100) according to the preceding claim, **characterized in that** the support part (13) has the form of a band, and is made up of a strip of material that forms the bottom (12) of the plain bearing (10) that is joined by the ends (13a, 13b) thereof to the aforementioned bottom (12) and which is slightly cambered towards the mouth (11) of the plain bearing (10).

8. The pedal group (100) according to the preceding claim, **characterized in that** in the strip of material that has the shape of a band, and which forms the support part (13), a central part (13c) is distinguished that is acutely more arched, on the top of which the free end of the pedal shaft (3) introduced in the plain bearing (10) rests.

9. The pedal group (100) according to any one of the preceding claims, **characterized in that** the distance D is comprised between 0.75 mm and 1.5 mm.

10. The pedal group (100) according to any one of the preceding claims, **characterized in that** the distance d is at least 60% of the distance D.

11. The pedal group (100), according to any one of the preceding claims, **characterized in that** the pedal support (6) comprises at least an extension that acts as a limit stop (7) of the axial movement of the pedal shaft (3) by contact with the pedal body (2) only when the same takes an angular position within a pre-established range within which the pedal is intended to be able to operate to carry out the function thereof.

## Patentansprüche

1. Pedalgruppe (100), wie eine Bremspedalgruppe eines Fahrzeugs, welche, in einer Montageposition, einen Pedalkörper (2) umfasst, welcher mit einer Pedalwelle (3) verbunden ist, deren erstes und zweites freie End (3a, 3b) in Gleitlagern (10) eingeführt sind, welche jeweils in einem Stützloch (5) einer Pedalstütze (6) aufgenommen sind, wobei die genannten Gleitlager (10) auf dem Außenteil derselben und im Bereich der Mündung (11) derselben eine Rückschlagstufe (14) aufweisen, welche in einer Betriebsposition der Pedalgruppe am Innenrand (5b) des Stützlochs (5) der Pedalstütze (6) anliegen, und welche verhindert, dass das Gleitlager aus dem zuvor erwähnten Loch in der Richtung nach außen der Pedalstütze entnommen wird, wobei die Pedalgruppe **dadurch gekennzeichnet ist, dass** die Pedalwelle (3) eine Wulst (A oder A') in der Nähe mindestens eines des ersten oder des zweiten freien Endes (3a, 3b) aufweist, welche
- in der Betriebsposition des Pedalgruppeaggregats die Mündung (11) des Gleitlagers (10), in welchem das genannte freie Ende (3a, 3b) eingeführt ist, nicht beeinträchtigt, aber welche
- in einer gezwungenen Montageposition, welche eine ungewünschte Axialbewegung D der Pedalwelle (3) umfasst, die Mündung (11) des zuvor erwähnten Gleitlagers beeinträchtigt, indem sie nach außen ausdehnt, sodass, unter anderen Effekten, die Rückschlagstufe (14) gegen den zuvor erwähnten Innenrand (5b) des Stützlochs (5) der Pedalstütze (6) verankert wird.

2. Pedalgruppe (100) nach Anspruch 1, **dadurch gekennzeichnet, dass** die Wulst (A) aus einem diskreten Vorsprung (20) gebildet ist, welcher sich im Wesentlichen nicht entlang der Pedalwelle (3) erstreckt.

3. Pedalgruppe (100) nach dem vorhergehenden Anspruch, **dadurch gekennzeichnet, dass** die Wulst (A) aus einem ringförmigen Vorsprung (20) gebildet ist.

4. Pedalgruppe (100) nach Anspruch 1, **dadurch gekennzeichnet, dass** die Wulst (A') aus einem Übergang zwischen zwei Teilbereichen (33, 34) besteht, welche der Pedalwelle (3) längs benachbart sind, koaxial sind und unterschiedliche Querschnitte aufweisen.

5. Pedalgruppe (100) nach den Ansprüchen 3 und 4, deren Pedalwelle (3), in der Nähe eines ersten freien Endes (3a), eine erste Wulst (A) aufweist, welche aus einem ringförmigen Vorsprung (20) gebildet ist; und in der Nähe eines zweiten freien Endes (3b) eine zweite Wulst (A') aufweist, welche aus einem Übergang zwischen zwei längs benachbarten Teilbereichen (33, 34) der Pedalwelle (3) gebildet ist, welche koaxial sind und unterschiedliche Querschnitte aufweisen.

6. Pedalgruppe (100) nach einem der vorhergehenden Ansprüche, **dadurch gekennzeichnet, dass** das Gleitlager (10), oder gegebenenfalls die Gleitlager, in welchem ein freies Ende (3a; 3b) der Pedalwelle (3) mit der assoziierten Wulst (A oder A') eingeführt ist, einen Boden (12) mit einem Stützteil (13) umfasst, welcher die Stützung des zuvor erwähnten freien Ende der Pedalwelle empfangen soll und elastisch verformbar ist, um mindestens eine Axialbewegung d der Pedalwelle (3) in der Richtung zur Pedalstütze (6) hin aufzunehmen, wobei d<D ist und diese Axialbewegung d ungenügend ist, um die Beeinträchtigung der Wulst (A oder A') mit der Mündung (11) des Gleitlagers (10) zu erzeugen.

7. Pedalgruppe (100) nach dem vorhergehenden Anspruch, **dadurch gekennzeichnet, dass** das Stützteil (13) die Form eines Bandes hat, und aus einem Materialstreifen besteht, welcher den Boden (12) des Gleitlagers (10) bildet, welches mittels der Enden (13a, 13b) desselben mit dem zuvor erwähnten Boden (12) verbunden ist und welches leicht zur Mündung (11) des Gleitlagers (10) hin gekrümmt ist.

8. Pedalgruppe (100) nach dem vorhergehenden Anspruch, **dadurch gekennzeichnet, dass** im Materialstreifen, welcher die Form eines Bandes hat, und welcher das Stützteil (13) bildet, ein Mittelteil (13c) unterschieden wird, welcher überaus weiter mehr gewölbt ist, auf welchem das freie Ende der Pedalwelle (3), welches im Gleitlager (10) eingeführt ist, anliegt.

9. Pedalgruppe (100) nach einem der vorhergehenden Ansprüche, **dadurch gekennzeichnet, dass** der Abstand D zwischen 0,75 mm und 1,5 mm liegt.

10. Pedalgruppe (100) nach einem der vorhergehenden Ansprüche, **dadurch gekennzeichnet, dass** der Abstand d mindestens 60% des Abstands D ist.

11. Pedalgruppe (100), nach einem der vorhergehenden Ansprüche, **dadurch gekennzeichnet, dass** die Pedalstütze (6) mindestens einen Fortsatz umfasst, welcher als Begrenzungsanschlag (7) der Axialbewegung der Pedalwelle (3) mittels des Kontakts mit dem Pedalkörper (2) agiert, nur wenn derjenige eine Winkelposition innerhalb eines im Voraus festgelegten Bereiches einnimmt, innerhalb welches das Pedal in der Lage sein soll betriebsfähig zu sein, um die Funktion desselben durchzuführen.

## Revendications

1. Groupe de pédale (100), tel qu'un groupe de pédale de frein d'un véhicule, qui comprend, dans une position de montage, un corps de pédale (2) relié à un arbre de pédale (3) dont la première et seconde extrémités libres (3a, 3b) sont introduites dans des paliers lisses (10), chacun desquels est logé dans un trou de support (5) d'un support de pédale (6), dans lequel lesdits paliers lisses (10) ont sur leur partie extérieure et sur la zone de leur embouchure (11) un gradin anti-retour (14) qui, dans une position opérationnelle du groupe de pédale, demeure contre le bord intérieur (5b) du trou de support (5) du support de pédale (6), et qui évite que le palier lisse soit retiré dudit trou dans la direction allant vers l'extérieur du support de pédale, le groupe de pédale étant **caractérisé en ce que** l'arbre de pédale (3) a un renflement (A ou A') à proximité d'au moins une de la première ou seconde extrémités libres (3a, 3b) qui
- dans la position opérationnelle du montage de groupe de pédale, n'interfère pas avec l'embouchure (11) du palier lisse (10) dans laquelle ladite extrémité libre (3a, 3b) est introduite, mais qui
- dans une position de montage forcée qui comprend un mouvement axial non voulu D de l'arbre de pédale (3) interfère avec l'embouchure (11) dudit palier lisse, en l'élargissant vers l'extérieur, parmi d'autres effets encrant le gradin anti-retour (14) contre ledit bord intérieur (5b) du trou de support (5) du support de pédale (6).

2. Groupe de pédale (100) selon la revendication 1, **caractérisé en ce que** le renflement (A) est composé d'une saillie discrète (20) qui ne s'étend pas essentiellement le long de l'arbre de pédale (3).

3. Groupe de pédale (100) selon la revendication précédente, **caractérisé en ce que** le renflement (A) est composé d'une saillie annulaire (20).

4. Groupe de pédale (100) selon la revendication 1, **caractérisé en ce que** le renflement (A') est constitué d'une transition entre deux parties (33, 34) longitudinalement contigües de l'arbre de pédale (3) coaxiales et avec des sections transversales différentes.

5. Groupe de pédale (100) selon les revendications 3 et 4, dont l'arbre de pédale (3), à proximité d'une première extrémité libre (3a), a un premier renflement (A) composé d'une saillie annulaire (20) ; et à proximité d'une seconde extrémité libre (3b) a un second renflement (A') composé d'une transition entre deux parties contigües longitudinales (33, 34) de l'arbre de pédale (3) coaxiales et avec des sections transversales différentes.

6. Groupe de pédale (100) selon l'une quelconque des revendications précédentes, **caractérisé en ce que** le palier lisse (10), ou le cas échéant les paliers lisses, dans lesquels est introduite une extrémité libre (3a ; 3b) de l'arbre de pédale (3) avec le renflement associé (A ou A'), comprend un fond (12) avec une partie de support (13) conçu pour recevoir le support de ladite extrémité libre de l'arbre de pédale, déformable élastiquement pour absorber au moins un mouvement axial d de l'arbre de pédale (3) dans la direction vers le support de pédale (6), dans lequel d<D, ce mouvement axial d étant insuffisant pour causer l'interférence du renflement (A ou A') avec l'embouchure (11) du palier lisse (10).

7. Groupe de pédale (100) selon la revendication précédente, **caractérisé en ce que** la partie de support (13) a la forme d'une bande, et est constituée d'un ruban de matériel qui forme le fond (12) du palier lisse (10) qui est relié par ses extrémités (13a, 13b) audit fond (12) et qui est légèrement cambré vers l'embouchure (11) du palier lisse (10).

8. Groupe de pédale (100) selon la revendication précédente, **caractérisé en ce que** dans le ruban de matériel qui a la forme d'une bande, et qui forme la partie de support (13), on distingue une partie centrale (13c) qui est profondément plus voûtée, sur la partie supérieure de laquelle demeure l'extrémité libre de l'arbre de pédale (3) introduite dans le palier lisse (10).

9. Groupe de pédale (100) selon l'une quelconque des revendications précédentes, **caractérisé en ce que** la distance D est comprise entre 0,75 mm et 1,5 mm.

10. Groupe de pédale (100) selon l'une quelconque des revendications précédentes, **caractérisé en ce que** la distance d est au moins 60% de la distance D.

11. Groupe de pédale (100) selon l'une quelconque des revendications précédentes, **caractérisé en ce que** le support de pédale (6) comprend au moins une extension qui agit en guise de butée (7) du mouvement axial de l'arbre de pédale (3) par contact avec le corps de pédale (2) uniquement lorsque celui-ci adopte une position angulaire dans une plage préalablement établie dans laquelle la pédale est conçue pour pouvoir agir pour mettre en oeuvre sa fonction.
